# EUROPÄISCHE PATENTANMELDUNG

(11) **EP 0 532 840 A2**
(43) Veröffentlichungstag der Anmeldung: **24.03.1993**
(21) Anmeldenummer: 92110309.9
(22) Anmeldetag: 18.06.1992
(51) Int. Cl.: B60R 16/00

(54) **Warnblinkanlage für ein Kraftfahrzeug**

(30) Priorität: 18.09.1991 DE 4130965
(71) Anmelder: Gebhard, Dietrich, D-76316 Malsch (DE)
(72) Erfinder: Gebhard, Dietrich, D-76316 Malsch (DE)
(74) Vertreter: Weller, Wolfgang, Dr.rer.nat.

(57) **Zusammenfassung**

Eine Warnblinkanlage für ein Kraftfahrzeug mit einem Lenkrad (25) ist über zumindest einen Schalter betätigbar. Dabei ist an dem Lenkrad (25) zumindest ein Schaltteil zum Schalten der Warnblinkanlage angeordnet. Dieses Schaltteil ist in Bereichen (31, 32) des Lenkrades (25) vorgesehen.

## Beschreibung

Die Erfindung betrifft eine für ein Kraftfahrzeug mit einem Lenkrad vorgesehene Warnblinkanlage, die über zumindest einen Schalter betätigbar ist.

Derartige Warnblinkanlagen sind aus der Praxis bekannt.

Bei den bekannten Warnblinkanlagen sind die Schalter bei den verschiedenen Kraftfahrzeugen an den unterschiedlichsten Stellen angeordnet. Zwar ist in der Straßenverkehrszulassungsordnung vorgeschrieben, daß jedes Kraftfahrzeug mit einer Warnblinkanlage ausgerüstet sein muß und daß der entsprechende Schalter besonders ausgeführt und mit einer roten Kontrolleuchte ausgerüstet sein muß, es ist jedoch bisher nicht geregelt, wo dieser besondere Schalter untergebracht werden muß.

Insbesondere bei Gefahrensituationen, beispielsweise bei einem Stau auf der Autobahn, kommt es daher immer wieder vor, daß der Fahrzeugführer zunächst nach dem Betätigungsschalter für die Warnblinkanlage suchen muß, wodurch oft kostbare Zeit verlorengeht.

Zu einer weiteren, oft gefährlichen Zeitverzögerung kommt es dadurch, daß der Betätigungsschalter für die Warnblinkanlage entweder als Druckschalter, als Kipp- oder sogar als Drehschalter ausgebildet ist. Selbst wenn der Fahrzeugführer also den Schalter für die Warnblinkanlage gefunden hat, kann er diesen nicht sofort betätigen, sondern muß ggf. noch probieren, wie dies zu geschehen hat.

Aus all dem wird ersichtlich, daß durch die unterschiedlichen Anbringungs- und Betätigungsarten der Schalter für die Warnblinkanlagen von Kraftfahrzeugen in einer Gefahrensituation oft unnötig kostbare Zeit verlorengeht.

Es ist daher Aufgabe der vorliegenden Erfindung, eine Warnblinkanlage für ein Kraftfahrzeug zu schaffen, die bei einfachem konstruktiven Aufbau auf schnelle und einfache Weise zu betätigen ist.

Diese Aufgabe wird erfindungsgemäß dadurch gelöst, daß an dem Lenkrad zumindest ein Schaltteil zum Schalten der Warnblinkanlage angeordnet ist.

Die der Erfindung zugrundeliegende Aufgabe wird auf diese Weise vollkommen gelöst. Weil nämlich ein Schaltteil zum Schalten der Warnblinkanlage erfindungsgemäß an dem Lenkrad angeordnet ist, muß der Fahrzeugführer nicht lange im Fahrzeuginnenraum nach dem Schalter für die Warnblinkanlage suchen, sondern er hat ihn am Lenkrad unmittelbar vor sich. Hier ist besonders von Vorteil, daß der Fahrer sich nicht vor oder zur Seite beugen muß, um die Warnblinkanlage zu betätigen, er kann vielmehr beide Hände am Lenkrad halten und somit sicher auf die Gefahrensituation reagieren und trotzdem gleichzeitig die Warnblinkanlage einschalten.

Das Schaltteil kann dabei entweder unmittelbar ein Schalter sein, der die Warnblinkanlage schaltet, oder aber ein Sensor, der von einer nachgeschalteten Anordnung abgefragt wird, die ihrerseits die Warnblinkanlage schaltet.

In einem Ausführungsbeispiel, in dem das Lenkrad einen Griffkranz aufweist, ist es bevorzugt, wenn das zumindest eine Schaltteil an dem Griffkranz angeordnet ist.

Hier ist von Vorteil, daß der Fahrzeugführer im Gefahrenfalle lediglich mit der Hand an dem Griffkranz entlangfahren muß, bis er das Schaltelement, also den Schalter oder den Sensor, betätigen kann. Der Fahrer wird dabei folglich nicht mehr von dem Verkehr abgelenkt, wie es bei der Anordnung des Betätigungsschalters für die Warnblinkanlage an einem beliebigen Platz im Fahrzeuginnenraum häufig der Fall ist.

In einem weiteren Ausführungsbeispiel hat das Lenkrad einen Pralltopf, wobei das zumindest eine Schaltteil an dem Pralltopf angeordnet ist.

Hier ergeben sich die gleichen Vorteile wie oben beschrieben, der Fahrer muß seine Hände nicht oder zumindest nur kurzfristig von dem Lenkrad lösen, um die Warnblinkanlage einzuschalten. Dabei ist es nicht erforderlich, daß der Fahrer seine Sitzposition ändern muß, was dazu beiträgt, daß er die ihn zum Schalten der Warnblinkanlage veranlassende gefährliche Verkehrssituation besser "in den Griff" bekommt.

In einem weiteren Ausführungsbeispiel weist das Lenkrad Speichen auf, wobei das zumindest eine Schaltteil an den Speichen angeordnet ist.

In ähnlicher Weise, wie oben beschrieben, ergeben sich auch hier die Vorteile, daß der Fahrer zum einen nicht nach dem Schalter bzw. dem Schaltteil suchen muß, daß er andererseits seine Hände nicht von dem Lenkrad lösen und somit seine Sitzposition nicht verändern muß.

All diese Beispiele tragen dazu bei, daß die Warnblinkanlage nicht nur schneller eingeschaltet werden kann und somit der nachfolgende Verkehr früher auf eine Gefahrensituation aufmerksam gemacht wird, darüberhinaus ist auch die Sicherheit des Fahrzeugführers erhöht, denn er wird nicht von dem Verkehr abgelenkt und kann ohne seine Sitzposition zu verändern, den nachfolgenden Verkehr warnen.

Ferner ist es bevorzugt, wenn an dem Lenkrad verteilt mehrere Schaltteile angeordnet sind.

Hier ist von Vorteil, daß die Schaltteile unabhängig voneinander die Warnblinkanlage schalten können, so daß der Fahrzeugführer jeweils auf einem kurzen Weg seine Hände längs des Lenkrades zum Betätigen der Warnblinkanlage bewegen muß.

Ferner ist es bevorzugt, wenn zumindest zwei Schaltteile an dem Griffkranz vorgesehen sind.

Hier ist von Vorteil, daß die Schaltteile in der üblichen Handstellung des Geradeausfahrens an dem Lenkrad angeordnet sind. Jetzt kann der Fahrer die Warnblinkanlage schalten, ohne seine Hände auch nur in irgendeiner Weise von dem Lenkrad entfernen zu müssen. Das Schalten kann beispielsweise durch einen Druck mit den Fingern oder mit dem Handballen auf das Schaltteil ausgelöst werden.

In einer Weiterbildung ist es bevorzugt, wenn an dem Griffkranz zumindest vier Schaltteile angeordnet sind.

Auf diese Weise befindet sich in vorteilhafter Weise immer eine Hand entweder in der Nähe oder direkt an dem Schaltteil.

Ferner ist es bevorzugt, wenn das Schaltteil die Warnblinkanlage in Abhängigkeit vom Betätigungsdruck schaltet.

Bei diesem Ausführungsbeispiel ist es von Vorteil, daß der Fahrzeugführer lediglich durch festes Ergreifen des Lenkrades die Warnblinkanlage einschalten kann. Da sich ein Fahrzeugführer bei Gefahr unbewußt oder bewußt stärker am Lenkrad festhält als während des normalen Fahrbetriebes, wird auf diese Weise die Warnblinkanlage sozusagen "automatisch" geschaltet.

Hier ist es ferner bevorzugt, wenn das Schaltteil die Warnblinkanlage in Abhängigkeit von der Betätigungsdauer schaltet.

Durch diese Maßnahme wird in vorteilhafter Weise verhindert, daß der Fahrzeugführer die Warnblinkanlage unbeabsichtigt einschaltet. Er muß nämlich das Schaltteil für eine gewisse Dauer betätigen, bevor die Warnblinkanlage anspringt. Ein unbewußtes Berühren des Schaltteiles, beispielsweise während eines Rangiermanövers, führt somit nicht unbedingt sofort zum Einschalten der Warnblinkanlage. Insbesondere in Kombination mit dem druckabhängigen Schalten kann hier eine Fehlbedienung ausgeschlossen werden.

Weiterhin ist es bevorzugt, wenn die Schaltteile an besonders gekennzeichneten Abschnitten des Lenkrades angeordnet sind.

Durch diese Maßnahme sind entweder durch die Farbe oder die Form die Abschnitte so gekennzeichnet, daß der Fahrer sie gut erkennt. Damit ist auch sichergestellt, daß ein unerfahrener Fahrzeugführer, der das entsprechende Kraftfahrzeug nicht kennt, dennoch sofort die Lage der Schaltteile erkennt. Während nämlich der Fahrer in einem ihm unbekannten Fahrzeug nicht unbedingt den irgendwo an der Konsole angebrachten Schalter für die Warnblinkanlage erkennt, so blickt er doch - wenn auch unbewußt - während des Fahrens immer wieder auf das Lenkrad, wo ihm dann die besonders gekennzeichneten Abschnitte mit den Schaltteilen auffallen.

In einem weiteren Ausführungsbeispiel ist es bevorzugt, wenn die Schaltteile in das Lenkrad integriert sind.

Hier ist von Vorteil, daß die Schaltteile beim Lenken nicht stören und vor unbeabsichtigtem Schalten oder auch vor Beschädigungen geschützt sind. Insbesondere bei den modernen Lenkrädern, die mit einem nachgiebigen Kunststoff überzogen sind, lassen sich so auf einfache Weise druckabhängige Widerstände, induktive oder kapazitive Sensoren am Lenkrad anordnen, wobei die Widerstände oder Sensoren ein Signal abgeben, wenn der Fahrer das Lenkrad in dem gekennzeichneten Abschnitt fest umfaßt, so daß es sich verformt.

Hier ist es außerdem bevorzugt, wenn an dem Lenkrad ein Abschnitt eindrückbar ausgebildet ist und wenn im Bereich dieses Abschnittes als Schaltteil ein Druck- oder Tastschalter angeordnet ist.

Hier ist von Vorteil, daß im Bereich des eindrückbaren Abschnittes Schalter für elektrischen Strom, einen Hydraulik- oder Pneumatikkreis vorgesehen sein können. Während der Schalter für elektrischen Strom die Warnblinkanlage unmittelbar schaltet sind alternativ für die Fluidkreise als Ventil ausgebildete Schalter vorsehbar, wobei die Fluidkreise ihrerseits den Stromkreis der Warnblinkanlage schließen.

Weiterhin ist es bevorzugt, wenn dem Schaltteil eine Schaltanordnung nachgeschaltet ist, die in Abhängigkeit von der Betätigung des Schaltteiles die Warnblinkanlage einschaltet.

Dabei kann die Schaltanordnung noch im Lenkrad vorgesehen sein, während die eigentlichen Schalter an geeigneter Stelle im Fahrzeug angeordnet werden können.

Auf diese konstruktiv einfache Weise können die oben bereits erwähnten Sensoren sozusagen "ausgelesen" werden, wobei die Signale der Schaltanordnung dann zum Betätigen der Warnblinkanlage verwendet werden.

Ferner ist es bevorzugt, wenn die Schaltanordnung ein Relais umfaßt.

Durch diese konstruktiv einfache Maßnahme findet eine galvanische Trennung zwischen dem das Schaltteil umfassenden Ansteuerkreis einerseits und dem Schaltkreis für die Warnblinkanlage andererseits statt. Eine derartige galvanische Trennung ist insbesondere aus sicherheitstechnischen Gründen von Vorteil, weil somit in dem Lenkrad lediglich schwache Signalströme geführt werden.

In einem weiteren Ausführungsbeispiel ist es von Vorteil, wenn die Schaltanordnung ein Zeitglied aufweist.

Hier ist von Vorteil, daß durch die Wahl des Zeitgliedes eingestellt werden kann, wie lange der Fahrzeugführer das Schaltteil betätigen muß, bevor die Warnblinkanlage schaltet.

Ferner ist es bevorzugt, wenn die Schaltanordnung eine Vergleicherschaltung umfaßt.

Insbesondere bei als Sensoren ausgebildeten Schaltteilen ist hier von Vorteil, daß sichergestellt werden kann, daß erst bei einer entsprechend kräftigen Betätigung des Schaltteiles die Warnblinkanlage schaltet.

In einem weiteren Ausführungsbeispiel ist es von Vorteil, wenn die Schaltanordnung eine drahtlose Verbindung zwischen dem Schaltteil und der Warnblinkanlage herstellt.

Auch diese Maßnahme ist nicht nur unter sicherheitstechnischen sondern auch unter konstruktiven Gesichtspunkten von Vorteil. Zum einen findet eine galvanische Trennung statt, so daß in dem Lenkrad lediglich schwache Signalströme geführt werden müssen. Andererseits kann die Signalübertragung von dem Lenkrad zu dem eigentlichen Schalter beispielsweise über Funk, eine optische Verbindung wie beispielsweise Infrarot oder auch über ein Lichtleiterkabel erfolgen, so daß die mit dem Verlegen von Kabeln von dem drehbaren Lenkrad zu einem festen Schalter im Inneren des Fahrzeuges verbundenen konstruktiven Aufwände gemindert werden können.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist in der Zeichnung dargestellt und wird in der nachfolgenden Beschreibung näher erläutert. Es zeigen:
- Fig. 1: ein prinzipielles Schaltbild für die Verdrahtung einer Warnblinkanlage;
- Fig. 2: ein schematisch dargestelltes Lenkrad, mit besonders gekennzeichneten Abschnitten, an denen Schaltteile für die Warnblinkanlage nach Fig. 1 vorgesehen sind;
- Fig. 3: eine Darstellung wie Fig. 2, jedoch mit anderer Anordnung der Schaltteile;
- Fig. 4: einen Schnitt längs der Linie IV-IV aus Fig. 3, wobei für das Schaltteil vier verschiedene Ausführungsbeispiele gezeigt sind;
- Fig. 5: eine Schaltanordnung zum Auslesen und Verwerten der Signale der Schaltteile aus Fig. 4;
- Fig. 6: eine Schaltanordnung mit parallel geschalteten Schaltteilen, zum Einsatz in der Schaltanordnung nach Fig. 5; und
- Fig. 7: eine Schaltanordnung für eine drahtlose Verbindung zwischen dem Schaltteil und der Warnblinkanlage.

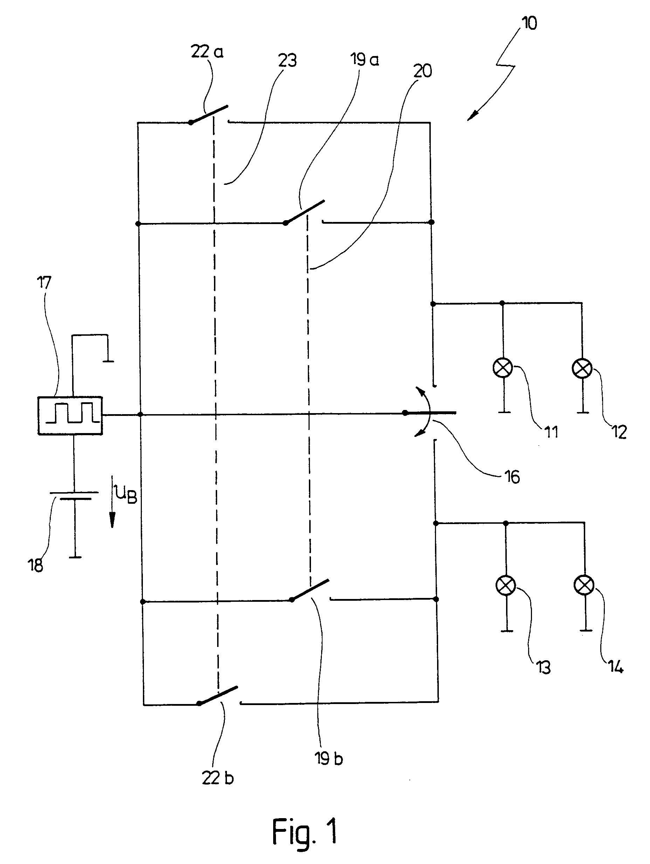

In Fig. 1 ist schematisch und auszugsweise die Verdrahtung einer Warnblinkanlage 10 dargestellt, die zwei linke Blinklichter 11 und 12 sowie zwei rechte Blinklichter 13 und 14 umfaßt. Wie üblich weist die Warnblinkanlage 10 einen Fahrtrichtungsschalter 16 auf, der drei Stellungen einnehmen kann. Während er in der in Fig. 1 gezeigten Mittenstellung unwirksam ist, verbindet er in seinen anderen Stellungen einen Blinkgeber 17 mit den linken Blinklichtern 11, 12 bzw. mit den rechten Blinklichtern 13, 14. Der Blinkgeber 17 ist weiterhin mit einer Batterie 18 verbunden, die ein nicht dargestelltes Kraftfahrzeug mit seiner Betriebsspannung versorgt.

Zusätzlich zu dem Fahrtrichtungsschalter 16 ist ein Warnblinkschalter 19 vorgesehen, der zwei Schließkontakte 19a, 19b aufweist, die gemeinsam betätigt werden. Dies ist durch eine gestrichelte Linie 20 angedeutet. Wird im Gefahrenfalle der Warnblinkschalter 19 geschlossen, so sind alle vier Blinklichter 11, 12, 13 und 14 mit dem Blinkgeber 17 verbunden.

Parallel zu dem Warnblinkschalter 19 sind Schließkontakte 22a, 22b vorgesehen, die ebenfalls gemeinsam geschaltet werden. Dies ist durch eine gestrichelte Verbindung 23 angedeutet. Die Beschaltung ist derart gewählt, daß die Warnblinkanlage entweder durch Schließen des Warnblinkschalters 19 oder durch Schließen der Schließkontakte 22a, 22b eingeschaltet werden kann.

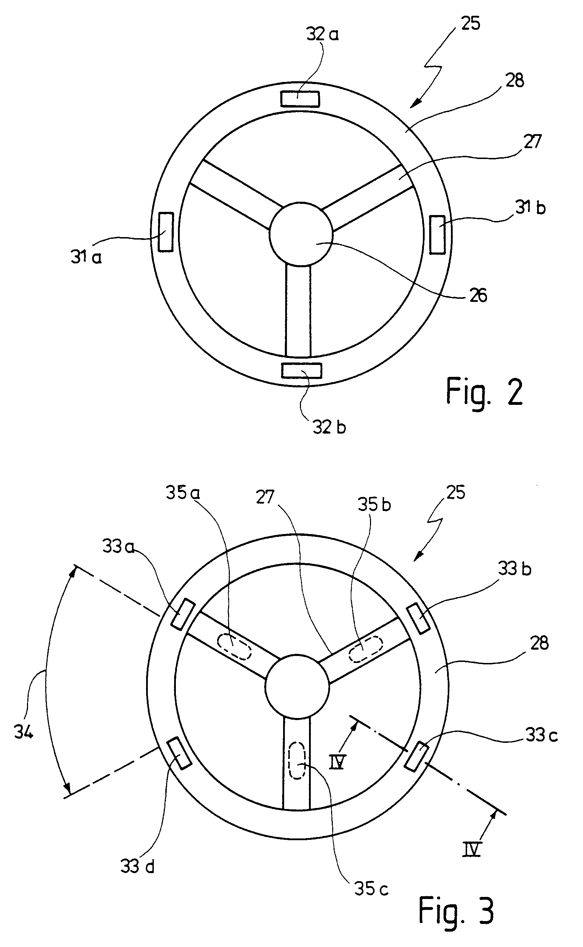

Während bei konventionellen Warnblinkanlagen nur der Warnblinkschalter 19 vorgesehen ist, weist die Warnblinkanlage gemäß Fig. 1 erfindungsgemäß die Schließkontakte 22a, 22b auf, die in noch näher zu beschreibender Weise über Schaltteile geschlossen werden, die an einem in Fig. 2 dargestellten Lenkrad 25 angeordnet sind.

Die schematisch dargestellten Schließkontakte 22a und 22b können dabei entweder in dem Lenkrad selbst eine galvanische Verbindung herstellen, oder aber lediglich einen Signalfluß andeuten, während ein Relais oder eine drahtlose Verbindung einen entsprechenden Schließkontakt in dem Fahrzeug in Gang setzt.

Das in Fig. 2 dargestellte Lenkrad 25 weist einen Pralltopf 26 auf, von dem sich radial nach außen drei Speichen 27 erstrecken, welche den Pralltopf 26 mit einem Griffkranz 28 verbinden.

An dem Griffkranz 28 sind vier Abschnitte 31a, 31b, 32a und 32b angedeutet, die sich farblich oder durch ihre Musterung von dem übrigen Griffkranz 28 unterscheiden. In diesen Abschnitten 31, 32 sind in noch näher zu beschreibender Weise Schaltteile angeordnet, über die die Schließkontakte 22 (siehe Fig. 1) geschlossen werden können.

In Fig. 2 ist zu erkennen, daß die Abschnitte 31a und 31b einander radial gegenüberstehen und dort angeordnet sind, wo ein Fahrzeugführer bei normaler Geradeausfahrt üblicherweise seine Hände hält. Demgegenüber sind die Abschnitte 32a und 32b gegenüber den Abschnitten 31 um 90° versetzt, so daß der Fahrer die Abschnitte 32a, 32b üblicherweise nur bei Lenkmanövern berühren wird.

In Fig. 3 dagegen sind Abschnitte 33a, 33b, 33c und 33d so angeordnet, daß sich je zwei Abschnitte auf einer Seite des Lenkrades 25 befinden. Die Abschnitte 32a und 32d lassen dabei zwischen sich genauso wie die Abschnitte 33b und 33c einen bei 34 angedeuteten Griffbereich frei, in den der Fahrzeugführer während normaler Geradeausfahrt üblicherweise seine Hände hält.

In Fig. 3 ist weiter zu erkennen, daß auf den Speichen 27 weitere Bereiche 35a, 35b und 35c vorgesehen sind. Die Bereiche 35 sind in Fig. 3 gestrichelt dargestellt, wodurch angedeutet werden soll, daß sie alternativ zu den Bereichen 33 vorgesehen sind. Während die Bereiche 33 sich durch die Farbgebung oder Strukturierung von dem übrigen Griffkranz 28 abheben, können die Bereiche 35 auch erhaben sein, so daß sie über die Speichen 27 überstehen.

Die in den Bereichen 31, 32, 33 und 35 unterzubringenden Schaltteile sind dabei so ausgebildet, daß beispielsweise die in den Bereichen 31 und 32 angeordneten Schaltteile durch stärkeren Druck als üblich auf das Lenkrad 25 geschaltet werden, während die in den Bereichen 33 und 35 angeordneten Schaltteile entweder durch einmaligen kurzen Druck oder durch eine längere Betätigung die Warnblinkanlage einschalten. Dies ist insofern sinnvoll, als ein Fahrzeugführer die Bereiche 33 und 35 während normaler Fahrt gar nicht berührt, sondern diese nur kurzfristig während Lenk- oder Rangiermanöver in der Hand hält. Die Bereiche 31 aus Fig. 2 dagegen werden vom Fahrzeugführer laufend berührt.

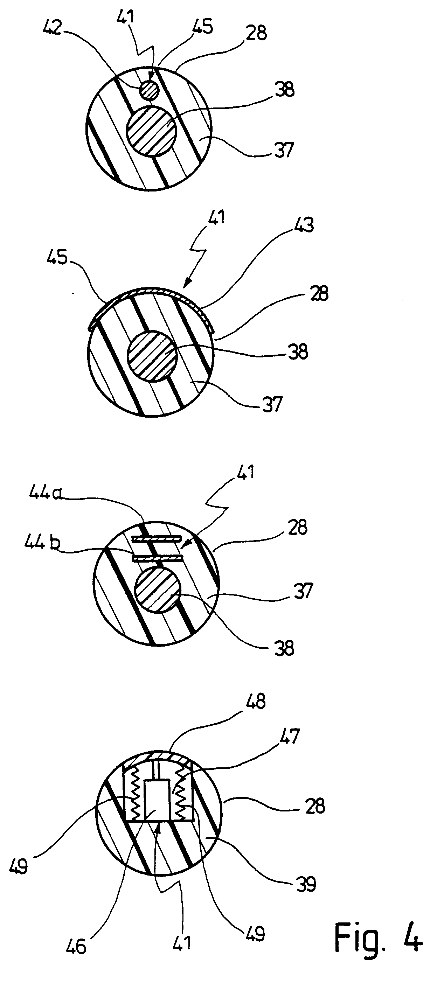

In Fig. 4 ist ein Schnitt längs der Linie IV-IV aus Fig. 3 dargestellt. Der Griffkranz 28 weist in den oberen drei Darstellungen aus Fig. 4 jeweils einen von einem weichen Kunststoff 37 umzogenen harten Innenkern 38 auf, während in dem unteren Beispiel aus Fig. 4 der Griffkranz 28 aus einem durchgehend harten Material 39 gebildet ist.

In den in Fig. 4 dargestellten Schnitten sind vier verschiedene Ausführungsbeispiele für Schaltteile 41 zum Betätigen der Schließkontakte 22 (Fig. 1) dargestellt.

In dem in Fig. 4 oberen Beispiel ist das Schaltteil 41 ein druckabhängiger Widerstand 42, der seinen Widerstandswert ändert, wenn der Fahrer das Lenkrad in dem Bereich ergreift und verformt, in dem der Widerstand 42 angeordnet ist. Wenn der Fahrer stärkeren Druck auf das Lenkrad ausübt, sei es unbewußt während eines Unfalles oder aber bewußt, um die Warnblinkanlage einzuschalten, verformt sich der Kunststoff 37, so daß auf den Widerstand 42 ein Druck ausgeübt wird und dieser seinen Widerstandswert ändert.

In dem zweiten Ausfüruungsbeispiel aus Fig. 4 ist das Schaltteil 41 ein Folienschalter 43, welcher auf der Oberfläche des Griffkranzes 28 angeordnet ist. Durch Berühren des Folienschalters 43 wird in noch näher zu beschreibender Weise eine Schaltanordnung angesteuert, die bei entsprechend langer Betätigungsdauer die Warnblinkanlage einschaltet.

In dem dritten Ausführungsbeispiel aus Fig. 4 weist das Schaltteil 41 zwei Kondensatorplatten 44a und 44b auf, deren Abstand sich beim Eindrücken des weichen Kunststoffes 37 verändert. Dadurch ändert sich auch der Kapazitätswert der beiden Kondensatorplatten 44 zueinander, was in einer nachgeschalteten Schaltanordnung detektiert wird.

Während in den oberen drei Ausführungsbeispielen aus Fig. 4 das Schaltteil 41 jeweils ein Sensor 45 ist, der druckabhängig oder berührungsabhängig reagiert, ist in dem unteren Ausführungsbeispiel ein Druck- oder Tastschalter 46 vorgesehen.

Der Druck- oder Tastschalter 46 ist in einem in dem Material 39 vorgesehenen Hohlraum 47 angeordnet, welcher von einem Deckel 48 verschlossen ist. Der Deckel 48 ist gegen die Kraft von Druckfedern 49 in den Hohlraum 47 hineindrückbar, wodurch der Druck- oder Tastschalter 46 betätigt wird.

Der Druck- oder Tastschalter 46 kann entweder ein elektrischer Schalter oder ein Ventilschalter für Hydraulik- oder Pneumatikkreise sein.

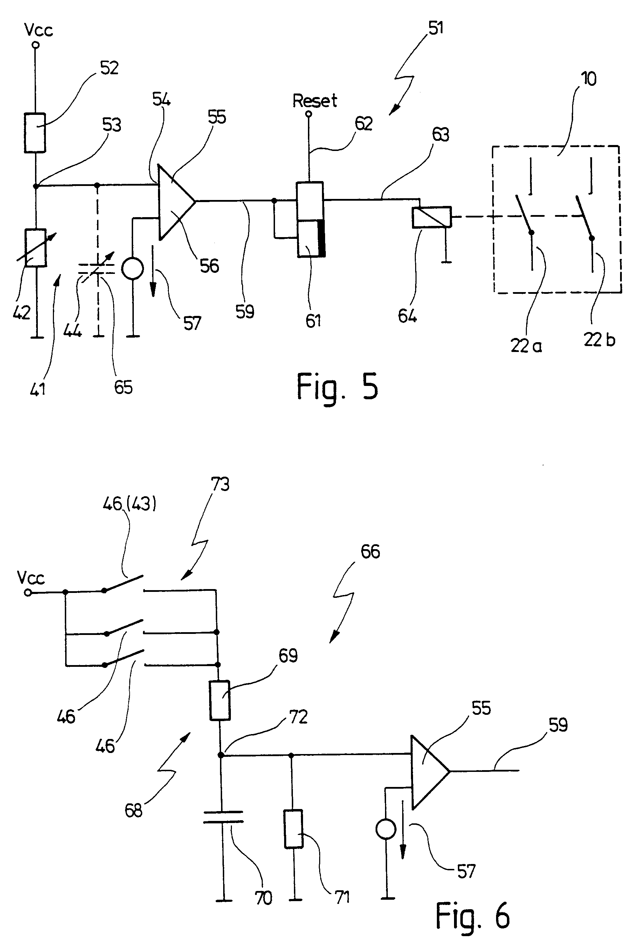

In Fig. 5 schließlich ist eine Schaltanordnung 51 zum "Auslesen" der Schaltteile 41, insbesondere des druckempfindlichen Widerstandes 42 und/oder der Kondensatorplatten 44 dargestellt.

Das Schaltteil 41 ist mit einem Vorwiderstand 52 in Reihe geschaltet und zwischen Masse und Versorgungsspannung VCC gelegt. An ihrem gemeinsamen Verbindungspunkt 53 sind Schaltteil 41 und Vorwiderstand 52 in einen ersten Eingang 54 einer Vergleicherschaltung 55 geführt. An ihrem zweiten Eingang 56 ist die Vergleicherschaltung 55 mit einer Vergleichsspannung 57 verbunden. Auf diese Weise wird eine an dem Verbindungspunkt 53 anstehende Spannung in der Vergleicherschaltung 55 mit der Vergleichsspannung 57 verglichen. Die Vergleicherschaltung 55 kann in bekannter Weise ein Operationsverstärker sein.

Die Vergleicherschaltung 55 ist an ihrem Ausgang 59 mit einem Speicherbaustein 61 verbunden, der beispielsweise ein Flip-Flop sein kann. Ferner ist ein Reset-Eingang 62 vergesehen, mit dem der Speicherbaustein 61 an seinem Ausgang 63 auf einen vorbestimmten Wert setzbar ist. Der Ausgang 63 ist in bekannter Weise mit einem Relais 64 verbunden, welches die Schließkontakte 22a und 22b der in Fig. 1 dargestellten Warnblinkanlage 10 betätigt.

Wenn als Schaltteil 41 ein druckabhängiger Widerstand 42 vorgesehen ist, so bilden Vorwiderstand 52 und druckabhängiger Widerstand 42 einen Spannungsteiler. Der Spannungsabfall über dem druckabhängigen Widerstand 42 ändert sich dabei mit dem Wert des Widerstandes 42. Wird also auf den druckabhängigen Widerstand 42 von außen ein Druck ausgeübt, so ändert sich die am Verbindungspunkt 53 anstehende Spannung umso stärker, je stärker der Druck ist. Wenn also der Fahrzeugführer genügend stark auf das Lenkrad drückt, so übersteigt die an dem Verbindungspunkt 53 anstehende Spannung schließlich die Vergleichsspannung 57 und die Vergleicherschaltung 55 schaltet um. Ist dies geschehen, wird das Ausgangssignal an der Leitung 59 in dem Speicherbaustein 61 gespeichert. Selbst wenn jetzt der Druck auf das Lenkrad wieder nachläßt und somit die an dem Verbindungspunkt 53 anstehende Spannung wieder kleiner wird als die Vergleichsspannung 57, bleibt der vorherige Zustand in dem Speicherbaustein gespeichert, bis er über die Reset-Leitung 62 gelöscht wird. Der Speicherbaustein 61 hat jetzt über seinen Ausgang 63 das Relais 64 geschaltet, so daß die Warnblinkanlage 10 in Betrieb ist.

Der Speicherbaustein 61 kann jetzt so ausgebildet sein, daß durch nochmaliges Drücken auf das Lenkrad, also durch nochmaliges Umschalten der Vergleicherschaltung 55 der Ausgang 63 wieder zurückgesetzt wird. In diesem Falle wäre der Speicherbaustein 61 also als Toggel-Flip-Flop geschaltet.

Wird der druckabhängige Widerstand 42 in der Schaltungsanordnung 51 durch die gestrichelt angedeuteten Kondensatorplatten 44 ersetzt, so arbeitet die Schaltung 51 wie folgt:

Durch den Vorwiderstand 52 lädt sich der von den Kondensatorplatten 44 gebildete Kondensator 65 auf die Versorgungsspannung VCC auf, welche über den Verbindungspunkt 53 an dem Eingang 54 der Vergleicherschaltung 55 ansteht. Wird jetzt durch Druck auf das Lenkrad 25 der Abstand zwischen den Kondensatorplatten 44 verrringert, geht die Spannung an dem Verbindungspunkt 53 wegen der bekannten Beziehung Q = C U zunächst zurück, bis über den Vorwiderstand 52 entsprechende Ladung nachgeliefert werden kann.

Ist der Druck auf das Lenkrad 25 groß genug, so wird die Kapazität des Kondensators 65 so klein, daß die am Verbindungspunkt 53 anstehende Spannung geringer wird als die Vergleichsspannung 57. In diesem Falle schaltet die Vergleichsschaltung 55 um, was in dem Speicherbaustein 61 gespeichert wird. Im übrigen funktioniert die Schaltungsanordnung 51 wie oben bereits beschrieben.

In Fig. 6 schließlich ist eine weitere Schaltungsanordnung 66 zum Auslesen des Folienschalters 43 sowie des Druck- oder Tastschalters 46 dargestellt. Die Schaltungsanordnung 66 umfaßt ein Zeitglied 68, das aus einer Reihenschaltung eines Widerstandes 69 und eines Kondensators 70 besteht. Parallel zu dem Kondensator 70 ist ein Entladewiderstand 71 vorgesehen. An ihrem gemeinsamen Verbindungspunkt 72 sind die Widerstände 69, 71 und der Kondensator 70 wieder mit der Vergleicherschaltung 55 verbunden. Im übrigen entspricht die Schaltungsanordnung 66 der Schaltungsanordnung 51, so daß dies in Fig. 6 nicht weiter dargestellt werden mußte.

Das Zeitglied 68 ist zwischen Masse und VCC gelegt, wobei zwischen VCC und Widerstand 69 eine Parallelschaltung 73 aus mehreren Schaltern 46 oder 43 angeordnet ist. Sobald der Fahrzeugführer einen der Schalter 46 (43) betätigt, wird über den Widerstand 69 der Kodensator 70 aufgeladen. Bleibt der betätigte Schalter bzw. das betätige Schaltteil 41 lange genug geschlossen, übersteigt die Spannung an dem Verbindungspunkt 72 schließlich die Vergleichsspannung 57 und - wie bereits oben mehrfach beschrieben - die Vergleicherschaltung 55 schaltet um. Wird der zuvor betätigte Schalter 46 (43) wieder geöffnet, so entlädt sich der Kondensator 70 über den Entladewiderstand 71.

Durch die Wahl der Größen der Widerstände 69 und 71 sowie des Kondensators 70 wird eine Zeitkonstante bestimmt, aus der sich ergibt, wie lange ein Schalter 46 (43) geschlossen sein muß, bis die Spannung am Verbindungspunkt 72 die Vergleichsspannung 57 überschreitet. Diese Zeitkonstante kann so gewählt werden, daß ein kurzzeitiges Schließen des Schalters 46 (43), sei es unbeabsichtigt oder bei einem Rangiermanöver, die Warnblinkanlage 10 noch nicht einschaltet.

Aus dem Gesagten wird deutlich, daß unabhängig davon, ob das Schaltteil 41 als Sensor ausgebildet ist, also beispielsweise als druckabhängiger Widerstand 42 oder Kondensatorplatte 44, oder aber als Schalter, beispielsweise als Folienschalter 43 oder Tast- oder Druckschalter 46, durch die Anordnung dieses Schaltteiles 41 am Lenkrad 25 ein schnelles und sicheres Schalten der Warnblinkanlage 10 möglich wird. In dem Fall, in dem als Schaltteil Sensoren vorgesehen sind, die nur bei sehr großem Druck einen Schaltvorgang auslösen, oder wo aber die entsprechenden Federn 49 sehr stark ausgebildet sind, können die Schaltteile - wie in Fig. 2 gezeigt - in den Abschnitten 31a und 31b angeordnet werden. Wenn bei einer solchen Anordnung der Fahrzeugführer eine Gefahr erblickt, so drückt er einfach entweder mit den Fingern oder mit dem Handballen stärker auf das Lenkrad und schaltet die Warnblinkanlage ein. Ist die Gefahr vorbei, so kann er diese durch einen zweiten Druck auf das Lenkrad wieder ausschalten.

Im Falle eines als Taster ausgebildeten Schaltteiles 41 empfiehlt sich dagegen die Anordnung aus Fig. 3, wo die Bereiche 33, in denen das Schaltteil 41 angeordnet ist, außerhalb des Greifbereiches 34 liegen. Hier ist es ferner vorzusehen, die Schaltteile 41 mit der Schaltungsanordnung 66 auszulesen, so daß erst bei einer längeren Betätigung der Schaltteile 41 in den Bereichen 33 die Warnblinkanlage 10 eingeschaltet wird. Ein kurzfristiges Berühren der Bereiche 33, beispielsweise bei einem Lenk- oder Rangiermanöver, führt dagegen nicht zu einem Schalten der Warnblinkanlage.

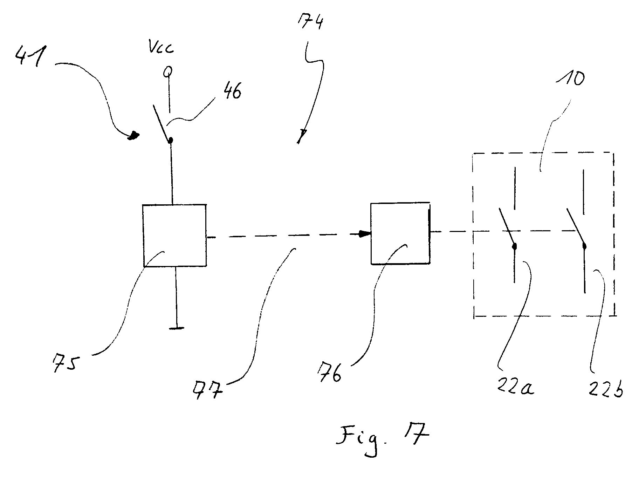

In Fig. 7 ist eine weitere Schaltanordnung 74 dargestellt, die eine drahtlose Verbindung zwischen dem hier als Druckschalter 46 ausgebildeten Schaltteil 41 und der Warnblinkanlage 10 herstellt. Über den Druckschalter 46 wird ein Sender 75 angesteuert, der mit einem Empfänger 76 über eine drahtlose Strecke 77 in Verbindung steht. Der Empfänger 76 wiederum betätigt auf geeignete Weise die Schließkontakte 22a und 22b, wenn der Druckschalter 76 geschlossen wird.

Die drahtlose Strecke 77 kann dabei eine Funkverbindung, eine optische Verbindung wie beispielsweise Infrarot, oder aber eine Lichtleiterverbindung darstellen. Im übrigen ist selbstverständlich auch eine Kombination der in den Fig. 5 bis 7 gezeigten Schaltanordnungen 71, 66 und 74 möglich.

Es sei noch erwähnt, daß der Sender 76 nicht zwingend im Lenkrad selbst, sondern auch beispielsweise im Pralltopf des Lenkrades angeordnet sein kann.

## Patentansprüche

1. Warnblinkanlage für ein Kraftfahrzeug mit einem Lenkrad (25), wobei die Warnblinkanlage (10) über zumindest einen Schalter (19, 22) betätigbar ist, dadurch gekennzeichnet, daß an dem Lenkrad (25) zumindest ein Schaltteil (41; 42, 43, 44, 46) zum Schalten der Warnblinkanlage (10) angeordnet ist.

2. Warnblinkanlage nach Anspruch 1, wobei das Lenkrad (25) einen Griffkranz (28) aufweist, dadurch gekennzeichnet, daß zumindest ein Schaltteil (41) an dem Griffkranz (28) angeordnet ist.

3. Warnblinkanlage nach Anspruch 1, wobei das Lenkrad (25) einen Pralltopf (26) aufweist, dadurch gekennzeichnet, daß zumindest ein Schaltteil (41) an dem Pralltopf (26) angeordnet ist.

4. Warnblinkanlage nach Anspruch 1, wobei das Lenkrad (25) Speichen (27) aufweist, dadurch gekennzeichnet, daß das zumindest eine Schaltteil an den Speichen (27) angeordnet ist.

5. Warnblinkanlage nach einem oder mehreren der Ansprüche 1 bis 4, dadurch gekennzeichnet, daß an dem Lenkrad (25) verteilt mehrere Schaltteile (41) angeordnet sind.

6. Warnblinkanlage nach Anspruch 5, dadurch gekennzeichnet, daß zumindest zwei Schaltteile (41) an dem Griffkranz (28) angeordnet sind.

7. Warnblinkanlage nach Anspruch 5, dadurch gekennzeichnet, daß zumindest vier Schaltteile (41) an den Griffkranz (28) angeordnet sind.

8. Warnblinkanlage nach einem der Ansprüche 1 bis 7, dadurch gekennzeichnet, daß das Schaltteil (41; 42, 44, 46) die Warnblinkanlage (10) in Abhängigkeit vom Betätigungsdruck schaltet.

9. Warnblinkanlage nach einem der Ansprüche 1 bis 8, dadurch gekennzeichnet, daß das Schaltteil (41; 43, 46) die Warnblinkanlage (10) in Abhängigkeit von der Betätigungsdauer schaltet.

10. Warnblinkanlage nach einem der Ansprüche 5 bis 9, dadurch gekennzeichnet, daß die Schaltteile (41) an besonders gekennzeichneten Abschnitten (31, 32, 33, 35) des Lenkrades (25) angeordnet sind.

11. Warnblinkanlage nach einem der Ansprüche 5 bis 10, dadurch gekennzeichnet, daß die Schaltteile (41) in das Lenkrad (25) integriert sind.

12. Warnblinkanlage nach einem der Ansprüche 1 bis 11, dadurch gekennzeichnet, daß an dem Lenkrad (25) ein Abschnitt (48) eindrückbar ausgebildet ist und daß im Bereich (47) dieses Abschnittes (48) als Schaltteil (41) ein Druck- oder Tastschalter (46) angeordnet ist.

13. Warnblinkanlage nach einem der Ansprüche 1 bis 12, dadurch gekennzeichnet, daß dem Schaltteil (41) eine Schaltanordnung (51, 66, 74) nachgeschaltet ist, die in Abhängigkeit von der Betätigung des Schaltteiles (41) die Warnblinkanlage (10) einschaltet.

14. Warnblinkanlage nach Anspruch 13, dadurch gekennzeichnet, daß die Schaltanordnung (51) ein Relais (64) umfaßt.

15. Warnblinkanlage nach einem der Ansprüche 13 oder 14, dadurch gekennzeichnet, daß die Schaltanordnung (66) ein Zeitglied (68) umfaßt.

16. Warnblinkanlage nach einem der Ansprüche 13 bis 15, dadurch gekennzeichnet, daß die Schaltanordnung (66) eine Vergleicherschaltung (55) umfaßt.

17. Warnblinkanlage nach einem der Ansprüche 13 bis 16, dadurch gekennzeichnet, daß die Schaltanordnung (74) eine drahtlose Verbindung (77) zwischen dem Schaltteil (41) und der Warnblinkanlage (10) herstellt.
